# EUROPÄISCHE PATENTSCHRIFT

(11) **EP 1 034 179 B1**
(45) Veröffentlichungstag und Bekanntmachung des Hinweises auf die Patenterteilung: **26.02.2003**
(21) Anmeldenummer: 98966239.0
(22) Anmeldetag: 17.11.1998
(51) Int. Cl.: C07F 9/30, C08K 5/5313

(54) **VERFAHREN ZUR HERSTELLUNG VON DIALKYLPHOSPHINSÄUREN**
METHOD FOR PRODUCING DIALKYLPHOSPHINIC ACIDS
PROCEDE POUR LA PREPARATION D'ACIDES DIALKYLPHOSPHINIQUES

(30) Priorität: 28.11.1997 DE 19752734; 10.11.1998 DE 19851618
(43) Veröffentlichungstag der Anmeldung: 13.09.2000
(73) Patentinhaber: Clariant GmbH, 65929 Frankfurt am Main (DE)
(72) Erfinder: WEFERLING, Norbert, D-50354 Hürth (DE); SCHMITZ, Hans-Peter, D-50321 Brühl (DE); KOLBE, Günter, D-50169 Kerpen (DE)
(86) Internationale Anmeldenummer: EP9807351
(87) Internationale Veröffentlichungsnummer: WO99028328

(56) Entgegenhaltungen:
- US-A- 2 957 931
- E.E. NIFANT'EV: "Acid catalysis in the hydrophosphorylation of olefins" JOURNAL OF GENERAL CHEMISTRY USSR., Bd. 50, Nr. 8/1, - August 1980 Seiten 1416-1423, XP002093427 NEW YORK US
- E.E. NIFANT'EV: "Hydrophosphorylation of cyclopentenes" JOURNAL OF GENERAL CHEMISTRY USSR., Bd. 61, Nr. 1/1, - Januar 1991 Seiten 83-92, XP002093428 NEW YORK US
- CHEMICAL ABSTRACTS, vol. 69, no. 16, 14. Oktober 1968 Columbus, Ohio, US; abstract no. 067487, Seite 6310; Spalte 2; XP002093429 & PETROV K.A.: "Dialkylphosphinic acids" KHIM. ORG. SOEDIN. FOSFORA, AKAD. NAUK SSSR, OTD. OBSHCH. TEKH. KHIM.,1967, Seiten 181-186, SU
- MARTINEZ M ET AL: "Synthesis of di(n-octyl)phosphinic acid. Influence of the sulfuric acid in the phosphination of 1-octene with sodium hypophosphite" AFINIDAD (AFINAE,00019704);1996; VOL.53 (466); PP.404-406, XP002098095 Univ. Politecnica Catalunya;Dep. Chem. Eng.; Barcelona; Spain (ES) in der Anmeldung erwähnt

## Beschreibung

Die Erfindung betrifft ein Verfahren zur Herstellung von Dialkylphosphinsäuren und/oder deren Alkalisalzen durch Umsetzung von Olefinen mit Alkylphosphoniger und/oder Hypophosphoriger Säure und/oder deren Alkalisalzen sowie die Verwendung der nach diesem Verfahren hergestellten Verbindungen.

Aufgrund ihrer schwierigen technischen Zugänglichkeit haben Dialkylphosphinsäuren und ihre Derivate nur in verhältnismäßg geringem Umfang technische Anwendungsgebiete gefunden.

Spezielle, durch Addition von verzweigten oder cyclischen Olefinen an Phosphorwasserstoff erhaltene sekundäre Phosphane werden nach ihrer Oxidation zu Dialkylphosphinsäuren als selektive Extraktionsmittel zur Kobalt-/Nickel-Trennung eingesetzt.

Gemische aus Perfluoralkylphosphinsäuren und Perfluoralkylphosphonsäuren werden als spezielle Extraktionsmittel eingesetzt. Sie gehen aus der Umsetzung von Perfluoralkyljodiden mit elementarem Phosphor nach Hydrolyse und anschließender Oxidation hervor (DE-A-2 233 941).

Für die Herstellung von Dialkylphosphinsäurederivaten wie dem Totalherbizid Phosphinotricin muß eine aufwendige Syntheseroute über die Hydrolyse von Methyldichlorphosphan zu Methylphosphoniger Säure und anschließender Veresterung der vorgenannten Säure zu einem Phosphonigsäureester gewählt werden, bevor radikalinduziert die zweite Phosphor-Kohlenstoffbindung geknüpft werden kann.

Die Verwendung von Dialkylphosphinsäurederivaten als Flammschutzmittel für Polyester (Polyethylenterephthalat und Polybutylenterephthalat) ist beschrieben (EP 0 699 708 A1). Die Synthese der Endprodukte erfolgt in aufwendiger Weise unter Verwendung von Methyldichlorphosphan als phosphororganischem Ausgangsmaterial, wobei als Zwischenprodukte das Hydrolyseprodukt Methylphosphonige Säure sowie der Ester dieser Säure hergestellt und isoliert werden müssen.

Zur Herstellung von Dialkylphosphinsäuren bzw. deren Derivaten können derartige Alkylphosphonigsäureester unter radikalkatalytischen Bedingungen bei hohen Temperaturen mit α-Olefinen alkyliert werden. Bei einer Umsetzung von Alkylphosphonigen Säuren unter den gleichen Bedingungen erhält man allerdings nur die Disproportionierungsprodükte Alkylphosphine und Alkylphosphonsäuren, während unter milden Bedingungen keine Reaktion beobachtet wird.

Die US 4,632,741 A1 beschreibt ein Verfahren zur Herstellung von Gemischen aus Alkylphosphonigsäure- und Dialkylphosphinsäure-Salzen, indem ein Olefin mit einem Salz der Hypophosphorigen Säure in Anwesenheit eines Photoinitiators unter Verwendung von UV-Licht umgesetzt wird.

Die US 4,590,014 A1 beschreibt ein ähnliches Verfahren, bei dem die Umsetzung des Olefins mit dem Alkalisalz der Hypophosphorigen Säure in Anwesenheit einer Radikalquelle (Peroxidverbindung) erfolgt. Die Umsetzung endet in diesem Fall allerdings schon auf der Stufe der Alkylphosphonigen Säure.

Nach Martinez et al. [Afinidad 53, 404 (1996)] wird bei der zuvor beschriebenen Reaktion die Ausbeute an Dialkylphosphinsäure erhöht, wenn diese in Anwesenheit großer Mengen Schwefelsäure ausgeführt wird.

Die vorgenannt beschriebenen Verfahren führen jedoch insgesamt zu unbefriedigenden Ausbeuten und in fast allen Fällen zudem zu einem Gemisch von Reaktionsprodukten, welches mühsam aufbereitet werden muß.

Auch das in Chemical Abstracts, vol. 69, no. 16, vom 14. Oktober 1968 (abstract no. 067487, Seite 6310, Spalte 2) beschriebene Verfahren, bei welchem als relativ kurzkettiges Olefin 1-Hepten und als Radikalstarter tert.-Butylperoxid eingesetzt wird, ist wirtschaftlich unbefriedigend.

Der Erfindung liegt daher die Aufgabe zugrunde, ein Verfahren zur Herstellung von Dialkylphosphinsäuren und/oder deren Alkalisalzen durch Umsetzung von Olefinen mit Alkylphosphoniger und/oder Hypophosphoriger Säure und/oder deren Alkalisalzen zur Verfügung zu stellen, welches die vorgenannten Nachteile vermeidet und in kurzer Zeit zu hohen Ausbeuten an Dialkylphosphinsäuren und/oder deren Alkalisalzen führt.

Diese Aufgabe wird gelöst durch ein Verfahren der eingangs beschriebenen Art, dadurch gekennzeichnet, daß es sich bei den Olefinen um Ethylen, n-, i-Propylen, n-, i-Buten, n-, i-Penten, Butadien und/oder Isopren handelt und die Umsetzung in Gegenwart einer Azo-Verbindung erfolgt.

Bevorzugt handelt es sich bei den Azo-Verbindungen um kationische und/oder nicht-kationische Azo-Verbindungen.

Bevorzugt werden als kationische Azo-Verbindungen 2,2'-Azobis(2-amidinopropan)dihydrochlorid oder 2,2'-Azobis(N,N'-dimethylenisobutyramidin)dihydrochlorid eingesetzt.

Bevorzugt werden als nicht-kationische Azo-Verbindungen Azobis(isobutyronitril), 4,4'Azobis(4-cyano-pentansäure) oder 2,2'Azobis(2-methylbutyronitril) eingesetzt.

Bevorzugt handelt es sich bei der Alkylphosphonigen Säure und/oder deren Alkalisalzen um Methylphosphonige Säure oder Ethylphosphonige Säure und/oder deren Alkalisalze.

Bevorzugt erfolgt die Umsetzung in Gegenwart von Carbonsäuren.

Besonders bevorzugt handelt es sich bei der Carbonsäure um Essigsäure.

Bevorzugt erfolgt die Umsetzung bei einer Temperatur von 40 bis 130 °C.

Besonders bevorzugt erfolgt die Umsetzung bei einer Temperatur von 60 bis 100 °C.

Insbesondere wird das Verfahren bevorzugt bei einer Temperatur von 80 bis 95 °C ausgeführt.

Bevorzugt erfolgt die Umsetzung in einem Druckreaktor. Dies gilt insbesondere, wenn der Siedepunkt der Olefine unterhalb der Reaktionstemperatur liegt.

Die nach dem vorstehend beschriebenen Verfahren erhaltenen Dialkylphosphinsäuren und/oder deren Alkalisalze können zur Herstellung von Flammschutzmitteln verwendet werden.

Die nach dem vorstehend beschriebenen Verfahren erhaltenen Dialkylphosphinsäuren und/oder deren Alkalisalze können zur Herstellung von Flammschutzmitteln für thermoplastische Polymere verwendet werden.

Die nach dem vorstehend beschriebenen Verfahren erhaltenen Dialkylphosphinsäuren und/oder deren Alkalisalze können zur Herstellung von Flammschutzmitteln für thermoplastische Polymere wie Polyethylenterephthalat, Polybutylenterephthalat, Polystyrol oder Polyamide verwendet werden.

Die nach dem vorstehend beschriebenen Verfahren erhaltenen Dialkylphosphinsäuren und/oder deren Alkalisalze finden auch Verwendung als Additive in polymeren Massen, als Extraktionsmittel und oberflächenaktive Mittel.

Die Erfindung wird durch die nachstehenden Beispiele erläutert.

### Beispiel 1

100 g (1,25 Mol) Methylphosphonige Säure wurden zusammen mit 5 g (18 mMol, 1,5 Mol%) 2,2'-Azobis(2-amidinopropan)dihydrochlorid in einem Autoklav vorgelegt und unter Rühren zunächst auf 60°C aufgeheizt. Danach wurde Ethylen in den Reaktor bis zur Sättigung bei einem Druck von 20 bar eingeleitet. Nach 17 h Reaktionszeit bei max. 81 °C wurde der Reaktor entspannt und abgekühlt. Die Ausbeute betrug 135 g.
- ³¹P-NMR-Analyse:: Methyl-ethyl-phosphinsäure: 92,4 Mol%
Methyl-butyl-phosphinsäure: 6,2 Mol%
Methylphosphonige Säure: 0,9 Mol%
unbekannte Komponenten: 0,5 Mol%

### Beispiel 2

2,2 kg (20,7 Mol) Natriumhypophosphit-1-hydrat wurden in 8 kg (7,62 l) Essigsäure gelöst und in einem 16-L-Doppelmantel-Druckreaktor aus Stahl-Emaille vorgelegt. Nach Aufheizen der Reaktionsmischung auf 85 °C wurde über ein auf 5 bar eingestelltes Reduzierventil Ethylen bis zur Sättigung in den Reaktor eingeleitet. Die Reaktion wurde unter ständigem Rühren durch Zudosieren einer Lösung von 56 g (1 Mol%) 2,2'-Azobis-(2-amidinopropan)dihydrochlorid in 250 ml Wasser gestartet und über die Radikalstarter-Dosier-Geschwindigkeit so gesteuert, daß die Reaktionstemperatur im Reaktor bei einer Manteltemperatur von 80 °C unter ständiger Zuführ von Ethylen bei einem mittleren Druck von etwa 5 bar nicht über 95 °C stieg. Die Dosierzeit betrug insgesamt 3 Stunden. Danach ließ man noch 3 h bei 85 °C nachreagieren. Der Reaktor wurde entspannt, auf Raumtemperatur abgekühlt und der Inhalt analysiert.
- ³¹P-NMR-Analyse:: Diethylphosphinsäure-Na-Salz: 87,0 Mol%
Ethylbutylphosphinsäure-Na-Salz: 11,9 Mol%
Ethylphosphonige Säure-Na-Salz: 0,9 Mol%
Hypophosphorige Säure-Na-Salz: 0,1 Mol%
unbekannte Komponenten: 0,1 Mol%

Die Gesamt-Auswaage betrug 11,7 kg. Dies entspricht einer Ethylen-Aufnahme von 1,2 kg (100 % der Theorie).

### Beispiel 3

2,12 kg (20 Mol) Natriumhypophosphit-Monohydrat wurden in 7 kg Essigsäure gelöst und in einem 16-L-Doppelmantel Druckreaktor aus Stahl-Emaille vorgelegt. Nach Aufheizen der Reaktionsmischung auf 100°C wurde über ein auf 5 bar eingestelltes Reduzierventil Ethylen bis zur Sättigung in den Reaktor eingeleitet. Über einen Zeitraum von 6 h wurde unter ständigem Rühren bei einem Ethylendruck von 5 bar und einer Temperatur von 100-105°C eine Lösung von 32,8 g (1 Mol%) Azobis(isobutyronitril) (AIBN) in 500 g Essigsäure gleichmäßig zudosiert. Nach einer Nachreaktionszeit von 1 h, Entspannung des Reaktors und Abkühlung auf Raumtemperatur wurde der Inhalt analysiert:
- ³¹P-NMR:: Diethylphosphinsäure-Na-Salz: 91,3 Mol%
Butylethylphosphinsäure-Na-Salz: 7,7 Mol%
Ethylphosphonige Säure-Na-Salz: 0,7 Mol%
Unbekannte Komponenten: 0,3 Mol%

Die Ethylenaufnahme betrug 1160 g (100 % der Theorie)

### Beispiel 4

Ein Gemisch von 2,64 kg (20 Mol) einer 50%igen wäßrigen Lösung von Hypophosphoriger Säure und 7 kg Essigsäure wurde in einem 16-L-Doppelmantel Druckreaktor aus Stahl-Emaille vorgelegt. Nach Aufheizen der Reaktionsmischung auf 100°C wurde über ein auf 5 bar eingestelltes Reduzierventil Ethylen bis zur Sättigung in den Reaktor eingeleitet. Über einen Zeitraum von 6 h wurde unter ständigem Rühren bei einem Ethylendruck von 5 bar und einer Temperatur von 100-105°C eine Lösung von 56 g (1 Mol%) 4,4'Azobis(4-cyano-pentansäure) in 500 g Essigsäure gleichmäßig zudosiert. Nach einer Nachreaktionszeit von 1 h, Entspannung des Reaktors und Abkühlung auf Raumtemperatur wurde der Inhalt analysiert:
- ³¹P-NMR:: Diethylphosphinsäure: 90,6 Mol%
Butylethylphosphinsäure: 8,4 Mol%
Ethylphosphonige Säure: 0,8 Mol%
Unbekannte Komponenten: 0,2 Mol%

Die Ethylenaufnahme betrug 1160 g (100 % der Theorie)

### Beispiel 5

In einem 2-L-Dreihalskolben, ausgestattet mit Rührer, Rückflußkühler und Dosiervorrichtung wurde in eine Mischung von 42,4 g (0,4 Mol) Natriumhypophosphit-Monohydrat, 134,4 g (1,2 Mol) 1-Octen und 1 kg Essigsäure unter ständigem intensivem Rühren bei 95°C über einen Zeitraum von 16 h eine Lösung von 1,5 g (2 Mol%) 2,2'Azobis(2-methylbutyronitril) in 50 g Essigsäure gleichmäßig zudosiert. Nach einer Nachreaktionszeit von 1 h und Abkühlung auf Raumtemperatur wurde der Inhalt analysiert:
- ³¹P-NMR:: Dioctylphosphinsäure: 94,1 Mol%
Hexadecyloctylphosphinsäure: 4,2 Mol%
Octylphosphonige Säure: 1,1 Mol%
Unbekannte Komponenten: 0,6 Mol%

## Patentansprüche

1. Verfahren zur Herstellung von Dialkylphosphinsäuren und/oder deren Alkalisalzen durch Umsetzung von Olefinen mit Alkylphosphoniger und/oder Hypophosphoriger Säure und/oder deren Alkalisalzen, **dadurch gekennzeichnet, daß** es sich bei den Olefinen um Ethylen, n-, i-Propylen, n-, i-Buten, n-, i-Penten, Butadien und/oder Isopren handelt und die Umsetzung in Gegenwart einer Azo-Verbindung erfolgt.

2. Verfahren nach Anspruch 1, **dadurch gekennzeichnet, daß** es sich bei den Azo-Verbindungen um kationische und/oder nicht-kationische Azo-Verbindungen handelt.

3. Verfahren nach Anspruch 1 oder 2, **dadurch gekennzeichnet, daß** als kationische Azo-Verbindungen 2,2'-Azobis(2-amidinopropan)dihydrochlorid oder 2,2'-Azobis(N,N'dimethylenisobutyramidin)dihydrochlorid eingesetzt werden.

4. Verfahren nach Anspruch 1 oder 2, **dadurch gekennzeichnet, daß** als nicht-kationische Azo-Verbindungen Azobis(isobutyronitril), 4,4'Azobis(4-cyano-pentansäure) und/oder 2,2'Azobis(2-methylbutyronitril) eingesetzt werden.

5. Verfahren nach einem oder mehreren der Ansprüche 1 bis 4, **dadurch gekennzeichnet, daß** es sich bei der Alkylphosphonigen Säure und/oder deren Alkalisalze um Methylphosphonige Säure oder Ethylphosphonige Säure und/oder deren Alkalisalze handelt.

6. Verfahren nach einem oder mehreren der Ansprüche 1 bis 5, **dadurch gekennzeichnet, daß** die Umsetzung in Gegenwart von Carbonsäuren erfolgt.

7. Verfahren nach Anspruch 6, **dadurch gekennzeichnet, daß** es sich bei der Carbonsäure um Essigsäure handelt.

8. Verfahren nach einem oder mehreren der Ansprüche 1 bis 7, **dadurch gekennzeichnet, daß** die Umsetzung bei einer Temperatur von 40 bis 130 °C erfolgt.

9. Verfahren nach einem oder mehreren der Ansprüche 1 bis 8, **dadurch gekennzeichnet, daß** die Umsetzung bei einer Temperatur von 60 bis 100 °C erfolgt.

10. Verfahren nach einem oder mehreren der Ansprüche 1 bis 9, **dadurch gekennzeichnet, daß** die Umsetzung bei einer Temperatur von 80 bis 95 °C erfolgt.

11. Verfahren nach einem oder mehreren der Ansprüche 1 bis 10, **dadurch gekennzeichnet, daß** die Umsetzung in einem Druckreaktor erfolgt.

## Claims

1. A process for preparing dialkylphosphinic acids and/or alkali metal salts thereof by reacting olefins with alkylphosphonous and/or hypophosphorous acid and/or alkali metal salts thereof, which comprises the olefins being ethylene, n-propylene, isopropylene, n-butene, isobutene, n-pentene, isopentene, butadiene and/or isoprene, and carrying out the reaction in the presence of an azo compound.

2. The process as claimed in claim 1, wherein the azo compounds are cationic and/or non-cationic azo compounds.

3. The process as claimed in claim 1 or 2, wherein, as cationic azo compounds, use is made of 2,2'-azobis(2-amidinopropane) dihydrochloride or 2,2'-azobis(N,N'-dimethyleneisobutyramidine) dihydrochloride.

4. The process as claimed in claim 1 or 2, wherein, as non-cationic azo compounds, use is made of azobis(isobutyronitrile), 4,4'azobis(4-cyanopentanoic acid) and/or 2,2'azobis(2-methylbutyronitrile).

5. The process as claimed in one or more of claims 1 to 4, wherein the alkylphosphonous acid and/or alkali metal salts thereof are methylphosphonous acid or ethylphosphonous acid and/or alkali metal salts thereof.

6. The process as claimed in one or more of claims 1 to 5, wherein the reaction is carried out in the presence of carboxylic acids.

7. The process as claimed in claim 6, wherein the carboxylic acid is acetic acid.

8. The process as claimed in one or more of claims 1 to 7, wherein the reaction is carried out at a temperature of from 40 to 130°C.

9. The process as claimed in one or more of claims 1 to 8, wherein the reaction is carried out at a temperature of from 60 to 100°C.

10. The process as claimed in one or more of claims 1 to 9, wherein the reaction is carried out at a temperature of from 80 to 95°C.

11. The process as claimed in one or more of claims 1 to 10, wherein the reaction is carried out in a pressure reactor.

## Revendications

1. Procédé pour la préparation d'acides dialkylphosphiniques et/ou de leurs sels alcalins par réaction d'oléfines avec un acide alkylphosphoneux et/ou hypophosphoreux et/ou leurs sels alcalins, **caractérisé en ce que** il s'agit pour les oléfines d'éthylène, de n-, d'i-propylène, de n-, d'i-butène, de n-, d'i-pentène, de butadiène et/ou d'isoprène et **en ce que** la réaction se produit en présence d'un composé azoïque.

2. Procédé selon la revendication 1 **caractérisé en ce qu'**il s'agit pour les composés azoiques de composés azoïques cationiques et/ou non-cationiques.

3. Procédé selon la revendication 1 ou 2 **caractérisé en ce que** l'on emploie comme composés azoïques cationiques le dichlorhydrate de 2,2'-azobis(2-amidinopropane)- ou le dichlorydrate 2,2'-azobis(N,N'-diméthylène-isobutyramidine).

4. Procédé selon la revendication 1 ou 2 **caractérisé en ce que** l'on emploie comme composés azoïques non-cationiques de l'azobis-(isobutyronitrile), de l'acide 4,4'azobis(4-cyano-pentanoique) et/ou du 2,2'-azobis(2-méthylbutyronitrile).

5. Procédé selon une ou plusieurs des revendications 1 à 4 **caractérisé en ce que** il s'agit, pour l'acide alkylphosphoneux et/ou son sel alcalin, d'acide méthylphosphoneux ou d'acide éthylphosphoneux et/ou de leurs sels alcalins.

6. Procédé selon une ou plusieurs des revendications 1 à 5 **caractérisé en ce que** la réaction se produit en présence d'acides carboxyliques.

7. Procédé selon la revendication 6 **caractérisé en ce qu'**il s'agit pour l'acide carboxylique d'acide acétique.

8. Procédé selon une ou plusieurs des revendications 1 à 7 **caractérisé en ce que** la réaction se produit à une température de 40 à 130°C.

9. Procédé selon une ou plusieurs des revendications 1 à 8 **caractérisé en ce que** la réaction se produit à une température de 60 à 100°C.

10. Procédé selon une ou plusieurs des revendications 1 à 9 **caractérisé en ce que** la réaction se produit à une température de 80 à 95°C.

11. Procédé selon une ou plusieurs des revendications 1 à 10 **caractérisé en ce que** la réaction se produit dans un réacteur à pression.
